# EUROPÄISCHE PATENTSCHRIFT

(11) **EP 0 275 566 B1**
(45) Veröffentlichungstag und Bekanntmachung des Hinweises auf die Patenterteilung: **25.08.1993**
(21) Anmeldenummer: 87119406.4
(22) Anmeldetag: 31.12.1987
(51) Int. Cl.: H04M 19/08

(54) **Verfahren zur Reduzierung der Energieaufnahme einer Fernsprecheinrichtung, deren Versorgung mit elektrischer Energie über die Fernsprechleitung erfolgt, sowie Einrichtung zur Durchführung des Verfahrens**
Method and device for reducing the energy requirement by a telephone set powered by the telephone line
Méthode et dispositif pour la réduction de la prise d'énergie pour un appareil téléphonique, dont l'alimentation est effectuée par la ligne téléphonique

(30) Priorität: 23.01.1987 DE 3701919
(43) Veröffentlichungstag der Anmeldung: 27.07.1988
(73) Patentinhaber: Neumann Elektronik GmbH, D-45414 Mülheim (DE)
(72) Erfinder: Neumann, Dirk, Dipl.-Ing., D-4330 Mülheim/Ruhr (DE)
(74) Vertreter: Feder, Wolf-Dietrich, Dr. Dipl.-Phys.

(56) Entgegenhaltungen:
- EP-A- 0 023 693
- EP-A- 0 103 755
- US-A- 4 218 876

## Beschreibung

Die Erfindung betrifft ein Verfahren zur Reduzierung der Energieaufnahme einer Steuervorrichtung mit einem Mikroprozessorsystem, das statischen Betrieb zuläßt und dem der Systemtakt extern zugeführt wird, bei dem die Zuführung des Systemtaktes durch ein vom Mikroprozessorsystem selbst zu einem vorgegebenen Zeitpunkt abgegebenes internes Abschaltsignal abgeschaltet und mittels eines externen Einschaltsignals zu einem späteren vorgegebenen Zeitpunkt wieder eingeschaltet wird, wobei das externe Einschaltsignal aus einem vorgegebenen Steuertakt abgeleitet wird, sowie eine Einrichtung zur Durchführung dieses Verfahrens.

Ein derartiges Verfahren und eine Einrichtung zu dessen Durchführung sind in US-A- 4 218 876 beschrieben. Mittels des bekannten Verfahrens ist ein Mikroprozessorsystem aus einem Zustand, in dem es beispielsweise als Rechner mit hohem Strombedarf arbeitet, in einen Zustand umschaltbar, in dem es als digitaler Zeitgeber mit geringem Strombedarf arbeitet. Durch das bekannte Verfahren soll erreicht werden, daß eine die Einrichtung speisende Batterie eine möglichst lange Lebensdauer erreicht, indem ihr insgesamt möglichst wenig Energie entnommen wird. In der EP-A- 0 023 693 ist eine Schaltungsanordnung zum gezielten Unterbrechen des Funktionsablaufs einer Steuerschaltung beschrieben, bei welcher die Taktimpulse über eine Schaltstufe zugeführt werden, durch welche die Taktimpulse gesperrt werden, wenn nach dem Auftreten eines Sperrsignals die Steuerschaltung ein Zustandssignal abgibt, das einen vorgegebenen Zustand der Steuerschaltung kennzeichnet. Diese bekannte Schaltungsanordnung ist dazu gedacht, in einem Störungsfall, beispielsweise beim Absinken der Betriebsspannung, die Steuerschaltung in einen Ruhezustand zu schalten, in dem sie möglichst wenig Energie verbraucht.

Moderne Fernsprecheinrichtungen enthalten häufig neben den Hör-Sprecheinrichtungen Steuervorrichtungen zur Steuerung bestimmter Funktionsabläufe, die im allgemeinen mit einem Mikroprozessorsystem aufgebaut sind. Ein großes Problem derartiger Fernsprecheinrichtungen ist die Versorgung mit elektrischer Energie, wenn diese Energie, um die Fernsprecheinrichtung unabhängig von Ausfällen der Netzspannung zu machen, über die Fernsprechleitung selbst zugeführt werden soll. Der Fernsprechleitung kann grundsätzlich nur wenig elektrische Energie entnommen werden und diese wird zum größten Teil durch die Hör-Sprecheinrichtungen verbraucht, so daß für die Steuervorrichtung nur ein geringer Restenergieanteil übrig bleibt. Hinzu kommt, daß während der Abgabe von Wahlimpulsen die Energieversorgung jeweils kurzfristig unterbrochen ist. Die Steuervorrichtung muß daher interne Energiespeicher aufweisen, die aber während der Unterbrechungen der Energieversorgung nicht zu schnell entleert werden dürfen. Aus den oben erwähnten Gründen muß die Leistungsaufnahme der Steuervorrichtung außerordentlich gering gehalten werden.

Die der Erfindung zugrunde liegende Aufgabe bestand darin, ein Verfahren der eingangs erwähnten Art zu schaffen, mit dem es möglich ist, die Leistungsaufnahme der Steuervorrichtung erheblich zu reduzieren. Weiterhin sollte eine Einrichtung geschaffen werden, mittels der bei sehr geringem Aufwand eine Durchführung des Verfahrens ermöglicht wird.

Die Lösung der obengenannten Aufgabe erfolgt erfindungsgemäß mit den Merkmalen aus dem kennzeichnenden Teil des Patentanspruchs 1.

Eine Einrichtung zur Durchführung des Verfahrens nach Anspruch 1 ist Gegenstand von Anspruch 2. Eine vorteilhafte Ausführungsform der Einrichtung nach Anspruch 2 ist in Anspruch 3 beschrieben.

Der Grundgedanke der Erfindung besteht darin, den Systemtakt, der dem Mikroprozessorsystem von außen zugeführt wird, immer dann abzuschalten, wenn er nicht benötigt wird. Das hierbei zu lösende Problem bestand darin, daß eine Abschaltung beispielsweise softwaremäßig durch einen entsprechenden Befehl im Steuerprogramm vorgegeben werden kann, nicht aber eine Wiedereinschaltung, da nach dem Abschalten des Systemtaktes das Mikroprozessorsystem vollständig ausgeschaltet ist. Deshalb muß das Wiedereinschalten des Systemtaktes zu vorgegebenen Zeitpunkten von außen erfolgen. Das Ein- Ausschaltverhältnis kann individuell im Hinblick auf den Datendurchsatz und die erforderliche Leistungsaufnahme vorgegeben werden.

Wie weiter unten anhand eines Ausführungsbeispiels näher erläutert, wird die Taktfrequenz des in erster Linie das Wiedereinschalten steuernden Steuertaktes so gewählt, daß sie wesentlich niedriger ist als die Frequenz des Systemtaktes, also beispielsweise einen Wert von 256 Hz aufweist. Das interne Abschaltsignal wird zu irgendeinem beliebigen Zeitpunkt im Ablauf des Steuertaktes abgegeben. Dabei kann die Abgabe des internen Abschaltsignals rein softwaremäßig, also durch einen entsprechenden Befehl im Steuerprogramm, erfolgen. Sie kann aber auch aufgrund anderer Kriterien, beispielsweise aufgrund bestimmter Signalzustände innerhalb der Steuervorrichtung, abgeleitet werden. Nach dem Abschalten befindet sich die gesamte, das Mikroprozessorsystem enthaltende Steuervorrichtung in einem "Stand-By-Zustand", was nur eine sehr geringe Leistungsaufnahme zur Folge hat. Das Wiedereinschalten erfolgt dann zu einem durch den Steuertakt genau vorgegebenen Zeitpunkt. Das erfindungsgemäße Verfahren und die erfindungsgemäße Einrichtung haben über die reine Reduzierung der Energieaufnahme aus der Fernsprechleitung hinaus den großen Vorteil, daß, wie weiter unten genauer dargestellt, das Verfahren in Abhängigkeit von der vorhandenen Energie in sehr unterschiedlichen Betriebsarten durchgeführt werden kann. So können das interne Abschaltsignal und das externe Einschaltsignal gegebenenfalls zusammen mit einem weiteren externen Abschaltsignal, das ebenfalls aus dem Steuertakt abgeleitet ist, so aufeinander abgestimmt werden, daß drei unterschiedliche Betriebsarten möglich werden:
a) Die Zuführung des Systemtaktes bleibt in Abhängigkeit von den Signalzuständen der angegebenen Signale immer eingeschaltet;
b) die Zuführung des Systemtaktes wird in einer frei programmierbaren Abschaltung durch das interne Abschaltsignal abgeschaltet und durch das externe Einschaltsignal wieder eingeschaltet;
c) die Zuführung des Systemtaktes wird durch das externe Abschaltsignal abgeschaltet und durch das externe Einschaltsignal wieder eingeschaltet, d.h. das Mikroprozessorsystem wird zwangsweise im Zeittakt des Steuertaktes ein- und wieder ausgeschaltet.

Das Verfahren kann zwischen den drei obengenannten Betriebsarten wechselnd durchgeführt werden.

Im folgenden wird anhand der beigefügten Zeichnungen das erfindungsgemäße Verfahren und eine Einrichtung zur Durchführung dieses Verfahrens näher erläutert.

In den Zeichnungen zeigen:
- Fig. 1: in einem Prinzipschaltbild eine Einrichtung zur Durchführung eines Verfahrens zur Reduzierung der Energieaufnahme einer Fernsprecheinrichtung;
- Fig. 2: die Einrichtung nach Fig. 1 in einem etwas detaillierteren Schaltbild;
- Fig. 3: in Diagrammform verschiedene Signalzustände der Schaltung nach Fig. 2.

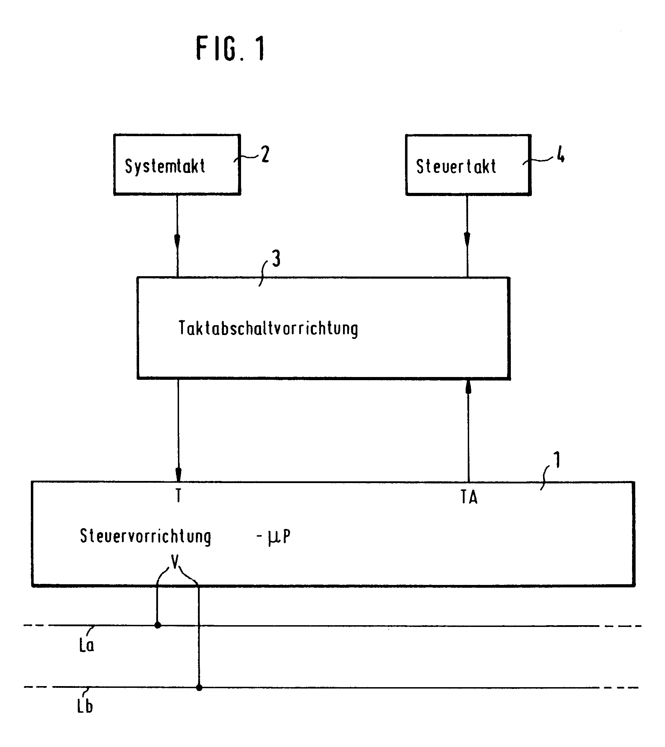

In Fig. 1 ist die ein Mikroprozessorsystem enthaltende Steuervorrichtung 1 einer in übrigen nicht näher dargestellen Fernsprecheinrichtung mit ihren Versorgungseingäangen V an eine Fernsprechleitung La-Lb angeschlossen. Von einem Taktgenerator 2 aus wird dem Takteingang T der Steuervorrichtung 1 der Systemtakt zugeführt. Zwischen den Taktgenerator 2 und die Steuervorrichtung 1 ist eine in Fig. 1 nur allgemein dargestellte Taktabschaltvorrichtung 3 eingeschaltet. Dieser Taktabschaltvorrichtung wird einerseits von einem weiteren Taktgenerator 4 aus ein Steuertakt zugeführt, dessen Frequenz wesentlich niedriger ist als die Frequenz des Systemtaktes. Außerdem wird der Taktabschaltvorrichtung 3 vom Taktabschaltausgang TA der Steuervorrichtung 1 aus ein internes Abschaltsignal zugeführt.

Die Taktabschaltvorrichtung 3 wird nun so angesteuert, daß auf ein bestimmtes vom Ausgang TA der Steuervorrichtung 1 abgegebenes Signal hin der Systemtakt abgeschaltet wird, so daß er nicht mehr zum Takteingang T gelangen kann. Zu einem bestimmten Zeitpunkt der aus dem vom Steuertaktgenerator 4 abgegebenen Steuertakt abgeleitet wird, wird wieder eingeschaltet, so daß der Systemtakt wieder den Takteingang T erreichen kann.

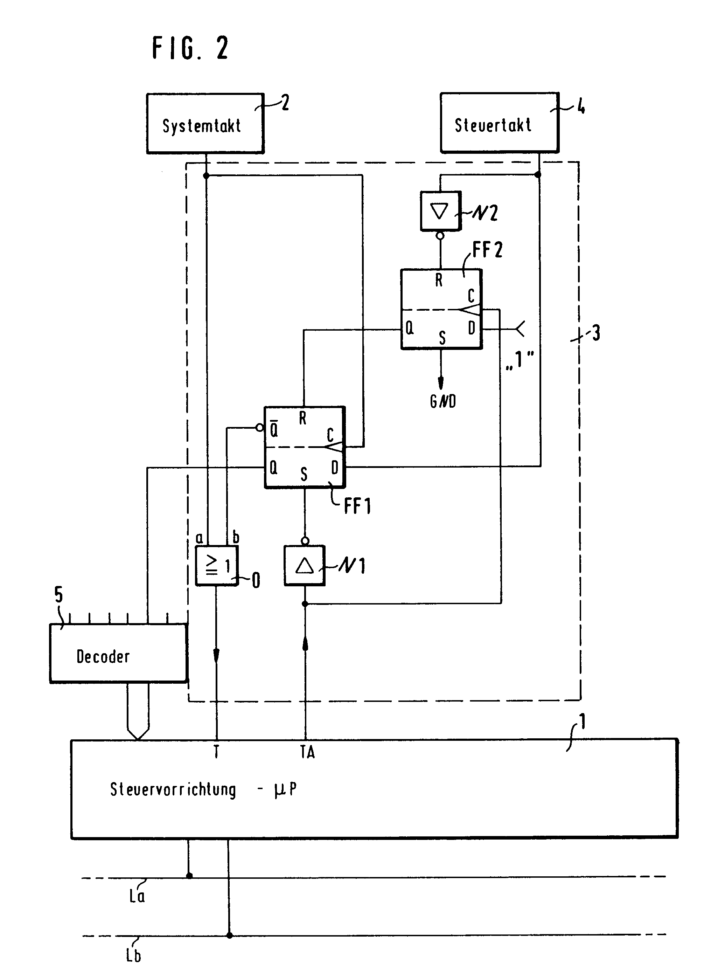

In Fig. 2 ist eine einfache Ausführungsform der Taktabschaltvorrichtung 3 genauer dargestellt.

Wie aus Fig. 2 zu entnehmen, enthält die Taktabschaltvorrichtung 3 ein ODER-Glied O, dessen Ausgang mit dem Takteingang T der Steuervorrichtung 1 verbunden ist. Dem ersten Eingang a des ODER-Gliedes O wird vom Taktgenerator 2 aus der Systemtakt zugeführt.

Weiterhin enthält die Taktabschaltvorrichtung ein erstes D-Flip-Flop FF1, dessen Takteingang C ebenfalls der Systemtakt zugeführt wird, während seinem D-Eingang vom Taktgenerator 4 aus der Steuertakt zugeführt wird. Der Setzeingang S des D-Flip-Flops FF1 ist über einen negierenden Verstärker N1 mit dem Ausgang TA der Steuervorrichtung 1 verbunden, während sein negierter Ausgang Q mit dem zweiten Eingang b des ODER-Gliedes O verbunden ist. Der nichtnegierte Ausgang Q des D-Flip-Flops FF1 ist zusätzlich über einen Decoder 5 mit der Steuervorrichtung 1 verbunden, während sein Rücksetzeingang R an den nichtnegierten Ausgang Q eines zweiten D-Flip-Flops FF2 angeschlossen ist. Der Takteingang C dieses D-Flip-Flops FF2 ist direkt an den Ausgang TA der Steuervorrichtung 1 angeschlossen, während sein Rücksetzeingang R über einen negierenden Verstärker N2 mit dem Ausgang des Steuertaktgenerators 4 verbunden ist. Sein Setzeingang S liegt am Massepotential GND.

Der D-Eingang des D-Flip-Flops FF2 wird konstant mit dem Signalwert "1" beaufschlagt.

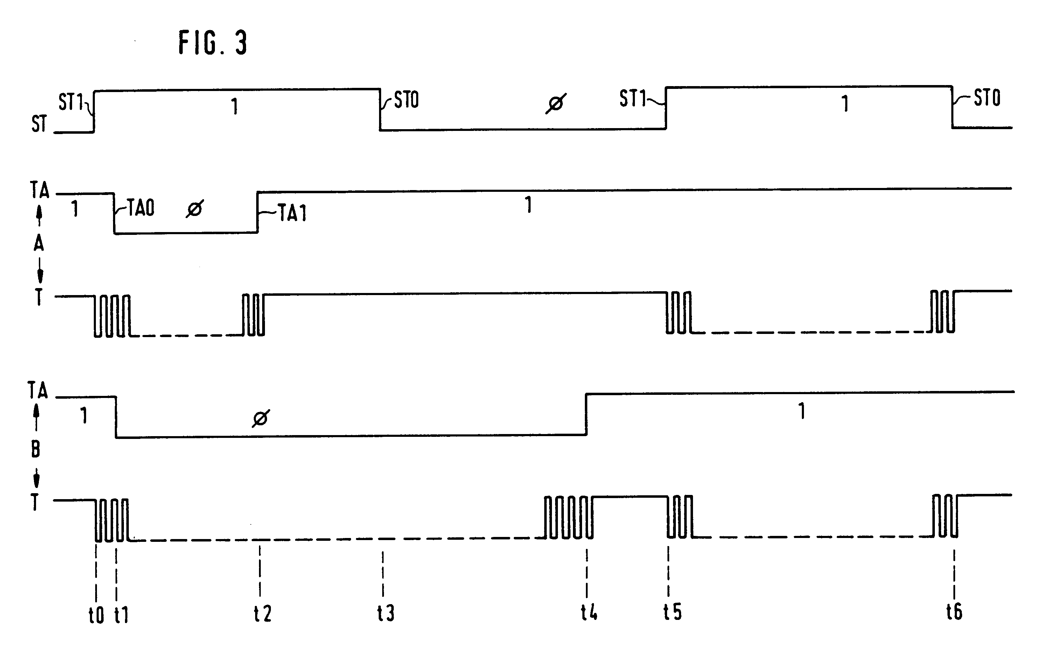

Es wird im folgenden vorausgesetzt, daß das am Ausgang TA der Steuervorrichtung 1 abgegebene Abschaltsignal die Zustände "0" oder "1" besitzen kann, wobei, wie weiter unten gezeigt wird, der Übergang "0-1" zur Abschaltung des Systemtaktes führt. Der Steuertakt besitzt ebenfalls die Zustände "0" und "1", wobei der Übergang "0-1" als externes Einschaltsignal (ST1 in Fig. 3) und der Übergang "1-0" als externes Abschaltsignal (ST0 in Fig. 3) wirkt.

Die Funktionweise der in Fig. 2 dargestellten Schaltung wird im folgenden anhand der in Fig. 3 dargestellten Signalzustände näher erläutert.

In Fig. 3 ist in der ersten Zeile der zeitliche Verlauf des Steuertaktes ST wiedergegeben. In den beiden nächsten Zeilen A sind der zeitliche Verlauf eines internen Abschaltsignals TA am Ausgang TA der Steuervorrichtung 1 sowie der entsprechende zeitliche Verlauf des Systemtaktes T am Eingang der Steuervorrichtung 1 wiedergegeben. Zur besseren Übersichtlichkeit ist der Frequenzunterschied zwischen Steuertakt und Systemtakt (Frequenzverhältnis ca. 1:25) wesentlich niedriger gewählt als dies in der Praxis der Fall ist.

In den beiden unteren Zeilen B in Fig. 3 sind die beiden Signale TA und T bei einer etwas anderen Betriebsart dargestellt. Als Zeitmaßstab dient jeweils der in der ersten Zeile dargestellte Steuertakt ST.

Es wird zunächst der Signalverlauf nach den Zeilen A in Fig. 3 erläutert.

Zum Zeitpunkt t0 wechselt der Steuertakt mit der Flanke ST1 vom Signalzustand "0" in den Signalzustand "1". Dies bedeutet, daß am D-Flip-Flop FF1 am negierten Ausgang Q der Wert "0" erscheint und am ODER-Glied O somit der Systemtakt durchgelassen wird und zum Eingang T gelangt. Der Signalzustand des internen Abschaltsignals TA befindet sich zu diesem Zeitpunkt auf dem Wert "1". Im Zeitpunkt t1 werde beispielsweise aufgrund eines Programmbefehls das Signal TA von "1" auf "0" gesetzt. Dies hat, wie aus dem Schaltbild in Fig. 2 abzulesen, zunächst keinen Einfluß auf den Zustand an den Ausgängen des D-Flip-Flops FF1 und der Systemtakt T gelangt weiterhin zum Eingang T der Steuervorrichtung 1. Wenn nun im Zeitpunkt t2 das interne Abschaltsignal TA wieder in den Zustand "1" zurückkehrt, wird am D-Flip-Flop FF2 der Wert "1" vom Eingang D zum Ausgang Q übernommen. Damit wird das D-Flip-Flop FF1 rückgesetzt und es erscheint am negierten Ausgang Q der Wert "1". Damit wird am ODER-Glied O der Systemtakt gesperrt.

Wenn zum Zeitpunkt t3 der Steuertakt mit der Flanke ST0 vom Zustand "1" in den Zustand "0" wechselt, während das Signal TA im Zustand "1" bleibt, hat dies zunächst keinen Einfluß auf den Abschaltzustand für den Systemtakt, obwohl die Rücksetzung des D-Flip-Flops FF1 aufgehoben wird, weil infolge des Übergangs ST0 am negierten Ausgang des D-Flip-Flops FF1 der Wert "1" erhalten bleibt.

Wenn jetzt allerdings zum Zeitpunkt t5 der Steuertakt mit der nächsten Flanke ST1 wieder den Wert "1" annimmt, wird einerseits die Rücksetzung am D-Flip-Flop FF2 aufgehoben und andererseits der Eingang D am D-Flip-Flop FF1 auf "1" gesetzt, was zur Folge hat, daß an seinem negierten Ausgang Q wieder die "0" erscheint und der Systemtakt wieder eingeschaltet wird.

In den Zeilen A in Fig. 3 ist auch dargestellt, was geschieht, wenn nach dem Zeitpunkt t5 das interne Abschaltsignal TA den Wert "1" beibehält. Es wird dann nämlich im Zeitpunkt t6, wenn im Steuertakt mit der Flanke ST0 wieder der Wert "0" erzielt wird, der Systemtakt zwangsweise abgeschaltet, da dann der negierte Ausgang Q am D-Flip-Flop FF1 wieder auf den Wert "1" gesetzt wird.

Hieraus ist ersichtlich, daß bei fortlaufendem Signalzustand "1" des internen Abschaltsignals TA eine extern gesteuerte Ausschaltung und Wiedereinschaltung des Systemtaktes stattfindet, wobei immer die erste Flanke ST1 des Steuertaktes ST den Systemtakt einschaltet, während die zweite Flanke ST0 ihn wieder ausschaltet.

In den Zeilen B in Fig. 3 ist ein etwas anders ablaufender Signalvorgang dargestellt. Zum Zeitpunkt t0 werde wiederum durch die Flanke ST1 des Steuertaktes ST der Systemtakt eingeschaltet und im Zeitpunkt t1 wird aufgrund eines internen Befehls das interne Abschaltsignal TA auf den Wert "0" gesetzt. Die Rücksetzung des internen Abschaltsignals TA auf den Wert "1" geschieht diesmal erst zum Zeitpunkt t4, indem sich der Steuertakt ST bereits im Zustand "0" befindet. Es läßt sich an der Schaltung nach Fig. 2 leicht ablesen, daß auch in diesem Fall eine Abschaltung des Systemtaktes stattfindet. Mit der nächsten Flanke ST1 des Steuertaktes ST wird zum Zeitpunkt t5 der Systemtakt wieder von außen eingeschaltet und wenn das Signal TA auf dem Wert "1" bleibt, zum Zeitpunkt t6 wieder abgeschaltet.

Ein Vergleich der Zeilen A und B zeigt, daß im Fall B eine wesentlich geringere Abschaltzeit zwischen t4 und t5 stattfindet. Weiterhin kann man leicht sehen, daß, wenn das interne Abschaltsignal TA auf dem Wert "0" verbleibt, überhaupt keine Abschaltung mehr stattfindet, sondern der Systemtakt unabhängig vom Steuertakt ST ständig eingeschaltet bleibt.

Die größen Zeiten für den abgeschalteten Zustand und damit die größte Reduzierung der aus der Fernsprechleitung entonommenen Energie wird somit erreicht, wenn, wie im ersten Abschnitt der Zeilen A in Fig. 3 dargestellt, der Systemtakt im Zustand "1" des Steuertaktes durch den Übergang TA1 von "0" auf "1" abgeschaltet wird. Der Übergang TA0 dient lediglich zur Vorbereitung dieses Abschaltvorgangs. Diese Betriebsart ist also im Hinblick auf die Energiereduzierung die günstigste, sie hat aber auch einen weiteren Vorteil, nämlich den, daß für das Mikroprozessorsystem der Zeitbezug erhalten bleibt.

Die in Fig. 2 dargestellte Schaltung hat den weiteren Vorteil, daß der nichtnegierte Ausgang Q des D-Flip-Flops FF1 mit einem Eingang eines Decoders 5 verbunden werden kann, über den weitere Vorrichtungen des Mikroprozessorsystems angesteuert werden können, und zwar so, daß jedesmal wenn am negierten Ausgang Q des D-Flip-Flops FF1 der Wert "1" erscheint und damit der Systemtakt abgeschaltet ist, durch den entsprechenden Wert "0" am nichtnegierten Ausgang Q weitere Vorrichtungen des Mikroprozessorsystems abgeschaltet werden.

## Patentansprüche

1. Verfahren zur Reduzierung der Energieaufnahme einer Steuervorrichtung mit einem Mikroprozessorsystem (1), das statischen Betrieb zuläßt und dem der Systemtakt extern zugeführt wird, bei dem die Zuführung des Systemtaktes durch ein vom Mikroprozessorsystem (1) selbst zu einem vorgegebenen Zeitpunkt (t2) abgegebenes internes Abschaltsignal (TA1) abgeschaltet und mittels eines externen Einschaltsignals (ST1) zu einem späteren vorgegebenen Zeitpunkt wieder eingeschaltet wird, wobei das externe Einschaltsignal (ST1) aus einem vorgegebenen Steuertakt (ST) abgeleitet wird, dadurch gekennzeichnet, daß bei einer Steuervorrichtung (1) einer Fernsprecheinrichtung, deren Versorgung mit elektrischer Energie über die Fernsprechleitung (La, Lb) erfolgt, die Leistungsaufnahme aus der Fernsprechleitung begrenzt wird, indem die Taktfrequenz des Steuertaktes (ST) klein gegen die Frequenz des Systemtaktes ist und sowohl der Steuertakt (ST) als auch das interne Abschaltsignal (TA1) aus im wesentlichen rechteckigen Impulsen bestehen, wobei eine erste vorgegebene Flanke (ST1) des Steuertaktes als externes Einschaltsignal dient, während die darauffolgende zweite Flanke als zusätzliches externes Abschaltsignal (ST0) dient, das eine zwangsweise Abschaltung des Systemtaktes bewirkt, wenn das interne Abschaltsignal (TA) einen vorgegebenen Signalzustand (TA1) besitzt.

2. Einrichtung zur Reduzierung der Energieaufnahme einer Steuervorrichtung mit einem Mikroprozessorsystem (1), das statischen Betrieb zuläßt, gemäß dem Verfahren nach Anspruch 1, mit einem externen Taktgenerator (2) zur Erzeugung des Systemtaktes und einer zwischen das Mikroprozessorsystem (1) und den Taktgenerator (2) eingeschalteten ansteuerbaren Taktabschaltvorrichtung (3), der ein internes Abschaltsignal (TA) sowie ein Steuertakt (ST) zugeführt werden, wobei aus letzterem ein externes Einschaltsignal (ST1) erzeugt wird, dadurch gekennzeichnet, daß die Taktabschaltvorrichtung (3) ein ODER-Glied (O) enthält, dessen Ausgang mit dem Takteingang (T1) des Mikroprozessorsystems (1) verbunden ist und dessen einem Eingang (a) der Systemtakt zugeführt wird, während dem zweiten Eingang (b) ein von einer Steuerschaltung (FF1-FF2) erzeugtes Signal zugeführt wird, das den Wert "0" besitzt, wenn das externe Einschaltsignal (ST1) anliegt und ein internes Abschaltsignal (TA1) nicht anliegt, und daß das interne Abschaltsignal die Zustände "0" oder "1" besitzt, wobei der Übergang "0-1" zur Abschaltung des Systemtaktes führt und der Übergang "0-1" des Steuertaktes als externes Einschaltsignal und der Übergang "1-0" des Steuertaktes als externes Abschaltsignal wirken und die Steuerschaltung ein erstes D-Flip-Flop (FF1) aufweist, dessen Takteingang (C) der Systemtakt und dessen D-Eingang (D) der Steuertakt zugeführt werden, während seinem Setzeingang (S) das negierte interne Abschaltsignal zugeführt wird, und sein negierter Ausgang (Q̅) mit dem zweiten Eingang (b) des ODER-Gliedes (O) verbunden ist und sein Rücksetzeingang (R) an den Ausgang (Q) eines zweiten D-Flip-Flops (FF2) angeschlossen ist, dessen Takteingang (C) das interne Abschaltsignal und dessen Rücksetzeingang (R) der negierte Steuertakt zugeführt werden, während sein D-Eingang (D) konstant mit dem Signalwert "1" beaufschlagt ist.

3. Einrichtung nach Anspruch 2, dadurch gekennzeichnet, daß der Ausgang (Q) des ersten D-Flip-Flops (FF1) über einen Decoder (5) mit weiteren abzuschaltenden Vorrichtungen des Mikroprozessorsystems (1) verbunden ist.

## Claims

1. Method for reducing the energy consumption of a control device having a microprocessor system (1), which permits steady-state operation and to which the system clock is externally supplied, in which the supply of the system clock is switched off by an internal switching-off signal (TA1), which is emitted by the microprocessor system (1) itself at a predetermined time (t2), and is switched on again by means of an external switching-on signal (ST1) at a later predetermined time, the external switching-on signal (ST1) being derived from a predetermined control clock (ST), characterised in that, in the case of a control device (1) of a telephone device which is supplied with electrical energy via the telephone line (La, Lb), the power consumption from the telephone line is limited by the facts that the clock frequency of the control clock (ST) is low in comparison with the frequency of the system clock and both the control clock (ST) and the internal switching-off signal (TA1) consist of essentially rectangular pulses, a first predetermined edge (ST1) of the control clock being used as the external switching-on signal, while the subsequent, second edge is used as an additional, external switching-off signal (ST0) which causes the system clock to be forced to switch off when the internal switching-off signal (TA) has a predetermined signal state (TA1).

2. Device for reducing the energy consumption of a control device having a microprocessor system (1), which permits steady-state operation, in accordance with the method according to Claim 1, having an external clock generator (2) for producing the system clock and having a selectable clock switching-off device (3), which is connected between the microprocessor system (1) and the clock generator (2), and to which an internal switching-off signal (TA) and a control clock (ST) are supplied, an external switching-on signal (ST1) being produced from said control clock (ST), characterised in that the clock switching-off device (3) contains an OR gate (O) whose output is connected to the clock input (T1) of the microprocessor system (1) and whose one input (a) is supplied to the system clock, while the second input (b) is supplied with a signal which is produced by a control circuit (FF1-FF2) and has the value "0" when the external switching-on signal (ST1) is present and an internal switching-off signal (TA1) is not present, and in that the internal switching-off signal has the states "0" or "1", the "0-1" transition leading to the control clock switching off, the "0-1" transition of the control clock acting as the external switching-on signal and the "1-0" transition of the control clock acting as the external switching-off signal, and the control circuit having a first D-flipflop (FF1) to whose clock input (C) the system clock is supplied and to whose D-input (D) the control clock is supplied, while the inverted internal switching-off signal is supplied to its set input (S) and its inverted output (Q̅) is connected to the second input (b) of the OR gate (O), and its reset input (R) is connected to the output (Q) of a second D-flipflop (FF2) to whose clock input (C) the internal switching-off signal is supplied and to whose reset input (R) the inverted control clock is supplied, while the signal value "1" is continuously applied to its D-input (D).

3. Device according to Claim 2, characterised in that the output (Q) of the first D-flipflop (FF1) is connected via a decoder (5) to further devices of the microprocessor system (1) which are to be switched off.

## Revendications

1. Procédé pour la réduction de la prise d'énergie d'un dispositif de commande comportant un système à microprocesseurs (1) qui permet le fonctionnement statique et auquel la cadence système est amenée de l'extérieur, procédé selon lequel l'amenée de la cadence système est coupée par un signal de coupure interne (TA1) émis (1) lui-même à un moment (t2) prédéterminé et remise en circuit au moyen d'un signal extérieur de remise en circuit (ST1) à un moment prédeterminé ultérieur, le signal extérieur de remise en circuit (ST1) étant dérivé d'une cadence de commande prédéterminée (ST), caractérisé en ce que, sur un dispositif de commande (1) d'une installation téléphonique dont l'alimentation électrique s'effectue par la ligne téléphonique (La, Lb), le prélèvement de puissance de la ligne téléphonique est limité du fait que la fréquence d'impulsions de la cadence de commande (ST) est basse par rapport à la fréquence de la cadence système et que, aussi bien la cadence système (ST) que le signal de coupure interne (TA1) sont tous deux constitués d'impulsions sensiblement rectangulaires, un premier flanc (ST1) prédéterminé de la cadence de commande servant de signal de mise en circuit extérieur, le deuxième flanc consécutif au premier servant de signal de coupure extérieur complémentaire (ST0), ce signal provoquant une coupure obligatoire de la cadence système si le signal de coupure interne (TA) se trouve dans un état prédéterminé (TA1).

2. Dispositif pour la réduction de la prise d'énergie d'un dispositif de commande comportant un système à microprocesseurs (1) qui permet le fonctionnement technique, selon le procédé objet de la revendication 1, comportant un générateur extérieur d'impulsions (2) pour la génération de la cadence système et un dispositif de coupure (3) pouvant être excité et intercalé entre le système à microprocesseurs (1) et le générateur d'impulsions (2), dispositif (3) auquel sont appliqués un signal de coupure interne (TA) ainsi qu'un rythme de commande (ST) à partir duquel est généré un signal extérieur de remise en circuit (ST1), caractérisé en ce que le dispositif de coupure (3) contient un élément OU (0) dont la sortie est reliée à l'entrée de synchronisation (T1) du système à microprocesseurs (1) et à l'une de ses entrées (a) étant amenée la cadence système tandis qu'à sa deuxième entrée (b) est appliqué un signal généré par un circuit de commande (FF1-FF2) lequel a la valeur "0" si le signal (ST1) est appliqué et qu'un signal de coupure interne (TA1) n'est pas appliqué, et en ce que le signal de coupure interne a les états "0" ou "1" tandis que le passage de "0 à 1" conduit à la coupure de la cadence système, le passage "0 à 1" de la cadence de commande exerçant l'effet d'un signal de remise en circuit extérieur et le passage de "1 à 0" de la cadence de commande qu'exerce l'effet d'un signal de coupure extérieur, le circuit de commande présentant une première bascule D (FF1) à l'entrée (C) de laquelle est amenée la cadence système et à l'entrée (D) de laquelle est amenée la cadence de commande, tandis qu'à son entrée (S) est appliqué le signal de coupure interne inversé et que sa sortie inversée (Q) est reliée à la deuxième entrée (B) de l'élément OU (O) et que son entrée de remise à zéro (R) est connectée à la sortie (Q) d'une deuxième bascule D (FF2) à l'entrée (C) de laquelle est appliqué le signal de coupure interne et à l'entrée de remise à zéro (R) de laquelle est amenée la cadence de commande inversée, tandis qu'à son entrée (D) est appliquée de manière constante la valeur du signal "1".

3. Installation selon la revendication 2, caractérisée en ce que la sortie (Q) de la première bascule D (FF1) est reliée par un décodeur (5) à d'autres dispositifs à déconnecter du système à microprocesseurs (1).
